# EUROPEAN PATENT APPLICATION

(11) **EP 4 283 440 A1**
(43) Date of publication of application: **29.11.2023**
(21) Application number: 22175501.0
(22) Date of filing: 25.05.2022
(51) Int. Cl.: G06F 3/01, G06T 19/00, G06T 19/20, G06V 20/20

(54) **MODIFYING A VIRTUAL REPRESENTATION OF A REAL ENVIRONMENT**

(71) Applicant: Koninklijke Philips N.V., 5656 AG Eindhoven (NL)
(72) Inventor: TALGORN, Elise Claude Valentine, Eindhoven (NL); BUIL, Vincentius Paulus, Eindhoven (NL); LAUTE, Niels, 5656AG Eindhoven (NL)
(74) Representative: Philips Intellectual Property & Standards

(57) **Abstract**

A mechanism for controlling or defining the allowable modifications to a virtual environment representing a real environment. For each of a number of real and/or virtual objects, a risk of (attempted) interaction is determined. The modifications to the virtual environment are restricted based on this attempted risk of interaction.

## Description

### FIELD OF THE INVENTION

The present invention relates to the field of virtual environments, and in particular to modifying a virtual environment.

### BACKGROUND OF THE INVENTION

There is an increasing interest in virtual environments for use in a number of use-case scenarios, such as clinical settings. In particular, providing a virtual representation of a real environment to an individual can be particularly helpful in allowing for the modification of an experience of the individual, e.g., to reduce stress or to provide information to an individual.

By way of example only, the virtual representation of the real environment could, for instance, augment the real environment by overlaying brighter, comforting colors and textures on existing/real objects (such as walls, furniture and equipment). Virtual objects or elements could also be added, such as plants, furniture, displays, virtual avatars, virtual pets, etc. It is also possible to virtually erase real objects from the virtual representation of the virtual environment, e.g., to erase potentially distressing objects or entities from a view of the individual.

In this way, it is possible to perform one or more modifications to a virtual environment. The virtual environment is therefore is a modifiable virtual representation of a real environment. A virtual representation of the real environment may be the only environment visible to a user. In other examples, the virtual representation may overlay a view of the real environment (e.g., mixed reality).

There is an ongoing desire to improve the effectiveness of a virtual environment and to reduce a risk to individuals that are presented with a virtual environment.

### SUMMARY OF THE INVENTION

The invention is defined by the claims.

According to examples in accordance with an aspect of the invention, there is provided a computer-implemented method of controlling allowable modifications to a virtual environment, being a modifiable virtual representation of a real environment, provided to an individual by a display provided at a user interface.

The computer-implemented method comprises: obtaining environment information defining one or more object locations, each object location representing a location of a real object in the real environment or a location of a virtual object space in the real environment, being a space in the real environment that is represented by a space occupied by a virtual object in the virtual environment; obtaining individual information defining at least a location of the individual; determining, for each object location, a risk of interaction between the individual and the real object or the virtual object space at the object location by processing the environment information and the individual information; and restricting the allowable modifications to the virtual environment responsive to every determined risk of interaction.

The proposed approach provides a mechanism for restricting what modifications can be made to a virtual environment based on a predicted risk or likelihood of interaction between an individual and real or virtual objects. It has been recognized that if virtual environments were presented to an individual without restriction, there is a risk that a user will attempt to interact with (e.g., sit upon or lean upon) a non-existent object or will fail to identify a real object, which could cause injury. Moreover, even if a real object is represented in the virtual representation, the texture or shape of the object may be virtually changed, which can cause stress or disturbance if interacted with by an individual in the real-world (as the tactile response will not match the visual appearance).

Approaches thereby provide a mechanism for restricting the allowable modifications to overcome at least some of these issues. By identifying the location of an individual, a risk that the individual will interact with (real or virtual) objects at known locations can be determined or predicted.

Preferably, the environment information comprises: an environment model, being a computer-storable model of the real environment in the vicinity of an individual; real object information defining, for each real object in the real environment, a model-space real object location, being a location of the representation of the real object in the environment model; and virtual object information, defining, for each virtual object space in the real environment, a model-space virtual object location, being a location of the representation of the virtual object space in the environment model; and the individual information comprises a model-space individual location, being a location of the individual defined with respect to the environment model.

The step of determining, for each object location, a risk of interaction may comprise: identifying one or more risk areas of the environment model by processing at least the environment model and the model-space individual location, each risk area being an area of the environment model that represents an area of the real environment that the individual is likely to occupy; determining, for each model-space real object location, the risk of interaction between the individual and the real object associated with the model-space real object location, the determining being responsive to a distance between the model-space real object location and the one or more risk areas of the environment model; and determining, for each model-space virtual object location, the risk of interaction between the individual and the virtual object space associated with the model-space virtual object location, the determining being responsive to a distance between the model-space virtual object location and the one or more risk areas of the environment model.

In at least one example, the individual information further comprises size information defining the dimensions of the individual; and the step of identifying one or more risk areas comprises processing at least the environment model, the model-space individual location and the size information to identify the one or more risk areas.

This approach recognizes that the dimensions of the individual will affect which areas of the environment are accessible to the individual, and thereby which areas of the virtual environment represent risk areas with which an individual may attempt to interact with virtual objects or real objects.

In some examples, the individual information further comprises posture and/or activity information defining the posture and/or activity of the individual; and the step of identifying one or more risk areas comprises processing at least the environment model, the model-space location and the posture and/or activity information to identify the one or more risk areas.

This approach recognizes that the likelihood that an individual will occupy an area is dependent upon their current posture and/or activity (e.g., whether they are sitting, standing, walking, working, watching TV, eating, etc.). Using posture and/or activity information thereby increases an accuracy of determining whether the individual is likely to occupy a particular area.

In some examples, the environment information further defines a type of each real object in the real environment. The defined type(s) may be used in determining the risk of interaction. Different types of real object have different inherent risks of interaction for an individual. For instance, an individual is more likely to interact with a chair than with a picture. Using a type of information in identifying the risk of interaction thereby increases an accuracy in determining the risk of interaction.

In some examples, the individual information comprises historic interaction information, being information on historic interactions of the individual with the real environment. The historic information may be used in the determining the risk of interaction. It is recognized that an individual is more likely to attempt to interact with a (real or virtual) object if they have previously interaction with the corresponding location of said object in the real environment. Thus, using this information increases an accuracy in determining the risk of interaction.

In some examples, the step of determining, for each object location, a risk of interaction comprises: processing at least the individual information to predict a future location of the individual; and processing at least the predicted future location of the individual and the environment information to determine, for each object location, a risk of interaction between the individual and the real object or virtual object space at the object location.

This approach recognizes that a probable future location for the individual will affect the likelihood that the individual will attempt to interact with a real/virtual object. In particular, if the individual is likely to reach a location of a real/virtual object, then there is an increased risk of interaction compared to if they are not likely to reach said location.

The individual information may further comprise one or more historic or previous locations of the individual. This recognizes that a future location can be determined or extrapolated from previous or historic locations, providing a mechanism for determining a future location of the individual.

In some examples, restricting the allowable modifications to the virtual environment comprises, responsive to a determined risk of interaction between the individual and a first real object exceeding a first predetermined risk threshold, restricting the minimum allowable opacity of the virtual representation of the first real object by the display provided at the user interface.

In some examples, restricting the allowable modifications to the virtual environment comprises, responsive to a determined risk of interaction between the individual and a second real object exceeding a second predetermined risk threshold, restricting the available shapes, colors and/or textures usable for modifying the shape, color or texture of the virtual representation of the second real object by the display provided at the user interface.

In some examples, restricting the allowable modifications to the virtual environment comprises, responsive to a determined risk of interaction between the individual and a first virtual object space exceeding a third predetermined risk threshold, restricting a maximum opacity of the virtual object that occupies the space of the virtual environment representing the first virtual object space.

There is also provided a computer program product comprising computer program code means which, when executed on a computing device having a processing system, cause the processing system to perform all of the steps of any herein disclosed method.

There is also provided a modification restriction system for controlling allowable modifications to a virtual environment, being a modifiable virtual representation of a real environment, provided to an individual by a display provided at a user interface.

The modification restriction system is configured to: obtain environment information defining one or more object locations, each object location representing a location of a real object in the real environment or a location of a virtual object space in the real environment, being a space in the real environment that is represented by a space occupied by a virtual object in the virtual environment; obtain individual information defining at least a location of the individual; determine, for each object location, a risk of interaction between the individual and the real object or the virtual object space at the object location by processing the environment information and the individual information; and restrict the allowable modifications to the virtual environment responsive to every determined risk of interaction.

There is also provided a user interface system comprising: the modification restriction system; and the user interface comprising a display for providing the virtual environment to the subject.

Any advantages of the computer-implemented method according to the present invention analogously and similarly apply to the system and computer program herein disclosed. It will be appreciated by those skilled in the art that two or more of the above-mentioned options, implementations, and/or aspects of the invention may be combined in any way deemed useful.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a user interface system; and
Fig. 2 illustrates a method for restricting allowable modifications to a virtual environment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for controlling or defining the allowable modifications to a virtual environment representing a real environment. For each of a number of real and/or virtual objects, a risk of (attempted) interaction is determined. The modifications to the virtual environment are restricted based on this attempted risk of interaction.

Approaches are based on the recognition that an individual, provided with a visual representation of a virtual environment at a user interface, is at risk of attempting to interact with virtually modified real objects or virtual objects that are not present in the real environment. This creates a risk of injury or discomfort to an individual, e.g., if the visual appearance of an object does not match the true texture/shape and/or if they attempt to apply force or weight to a non-existent object (or part of an object). By controlling the allowable modifications, restrictions can be set that reduce a likelihood that an individual will erroneously interact with such objects.

Embodiments can be applied in any scenario in which a virtual environment is visually represented to an individual, but find particular use in medical scenarios, which can employ virtual environment to enhance the information available to a clinician or improve a comfort of a patient.

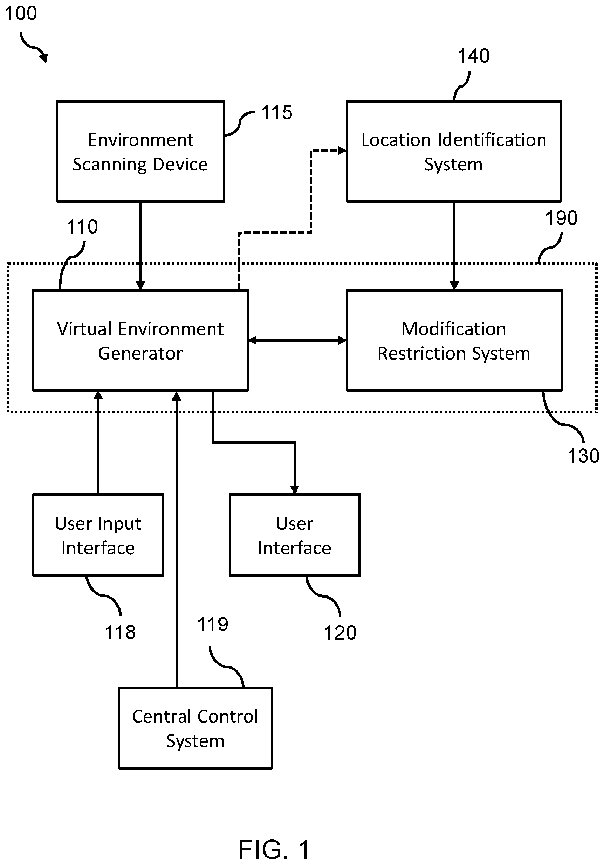

Fig. 1 illustrates a user interface system 100 according to an embodiment.

The user interface system 100 comprises a virtual environment generator 110 configured to generate a virtual environment. A virtual environment is a modifiable virtual representation of a real environment. For instance, the virtual environment may be represented by an environment model, being a computer-storable 3D model of the real environment.

Thus, the virtual environment generator 110 may be configured to construct an environment model. This model describes the layout of the environment (walls, doors, floors, ceilings), the objects (e.g. furniture) within it, and may further define the properties or appearance (e.g., color, texture and so on) for the various objects.

Approaches for generating a virtual environment that represents a real environment are well established, and make use of conventional 3D scanning techniques, such as photogrammetry, time-of-flight, LIDAR and so on. Such approaches are well established in the art, and are not described in detail for the sake of conciseness.

Accordingly, the user interface system may comprise an environment scanning device 115. The environment scanning device is configured to generate data or information that can be used to contrast a virtual representation of a real environment. Suitable data includes stereo images (e.g., for use in photogrammetry approaches), time-of-flight or depth data, LIDAR data and so on.

The virtual environment generator 110 and the environment scanning device 115 thereby together form a 3D scanner.

The virtual environment generator 110 may be configured to modify the virtual environment. By way of example, the virtual environment may be supplemented with one or more virtual elements or objects, i.e., elements or objects that do not have a true or real counterpart in the real environment (e.g., a virtual pet). As another example, virtual representations of real objects in the virtual environment could be modified, e.g., to change their size, location, appearance, texture, color, opacity or shape. For instance, it is possible to effectively "erase" a real object in the virtual environment, so that the virtual environment does not contain a virtual representation of the real object (e.g., the opacity of the virtual representation of the real object is set to 0).

The virtual environment generator 110 may be configured to modify the virtual environment responsive to a user input provided at a user interface 118. This allows a user or individual to control the content of the virtual environment. By way of example, a user may change the virtual representation of a real object having an undesirable appearance (e.g., a blank wall) such that the virtual representation of the real object has a desirable appearance (e.g., a picture of the individual's family). As another example, a user may add a virtual object to the virtual environment, so that a visual representation of the virtual object is provided to the individual at a user interface.

In some embodiments, the virtual environment generator 110 may be configured to modify the virtual environment responsive to a user input provided at a user input interface 118. Thus, a user/individual can define at least some of the content of the virtual environment.

In some embodiments, the virtual environment generator 110 may be configured to modify the virtual environment responsive to a central command provided by a central control system 119. The central control system 119 may, for instance, comprise a set of rules for defining modifications to be made to a virtual environment for the individual (e.g., to mask or camouflage potentially distressing real objects in the virtual representation of said objects).

A user interface 120 of the system 100 is configured to display a visual representation of the virtual environment to an/the individual. In particular, the virtual environment may be rendered (e.g., by the virtual environment generator 110) and the user interface 120 may provide a visual representation of the rendering.

Various approaches for presenting or displaying a virtual environment to an individual are well known in the art, and include providing a screen with a rendering of the virtual environment and/or projecting the virtual environment into the eye(s) of the individual.

In some examples, the virtual representation of the real environment may be the only environment visible to the individual. For instance, the individual may wear an enclosed headset that provides a rendering of the virtual environment to the individual.

In other examples, the virtual representation may overlay a view of the real environment (e.g., mixed reality). For instance, the individual may wear smartglasses (or a similar device) that supplement the user's vision with overlays and/or additional information. Examples of suitable products that can provide such mixed reality include the Hololens ^{®} device produced by Microsoft Corporation, or the Varjo ^{®} XR range of headsets.

The present invention relates to an approach for controlling the allowable modifications to the virtual environment. In particular, approaches propose to selectively restrict allowable modifications to the virtual environment based on a risk of (attempted) interaction between an individual and a real or virtual object represented in the virtual environment.

The proposed approach thereby provides a mechanism for restricting (or dynamically adjusting) the design of a virtual environment, responsive to predicted clashes between the real space and its corresponding virtual space. This can be used to counter (potential) discomfort or safety risks for the users.

Embodiments thereby propose a modification restriction system 130. The modification restriction system 130 functions to control or restrict the available or allowable modifications that can be made to the virtual environment based on a determined risk of interaction.

In the context of the present disclosure, an interaction is a physical interaction (e.g., an attempted physical touch between an individual and an object, real or virtual).

The virtual environment generator 110 and the modification restriction system 130 may form different modules of a same processing system 190.

The purpose of the modification restriction system 130 is to identify when a user is at risk of, about to or likely to interact with a real object or a virtual object space in the real environment. It will be appreciated that interaction between an individual and a real object or virtual object space might present a safety risk or comfort risk to the individual. For instance, if a real object has been made transparent in the virtual environment presented to the individual, then interaction with the real object could injure the individual. Similarly, if an individual attempts to interact with a virtual object, they will only encounter an empty space (the virtual object space), which could cause confusion or injury. As yet another example, if a user attempts to touch a real object whose virtual representation has an altered appearance (e.g., a change of apparent texture, color or shape), then the individual will be confused and discomforted, which can impact on their health outcomes.

Restricting or otherwise defining the allowable modification to the virtual environment (and/or the real/virtual objects represented in the virtual environment) can overcome one or more of these issues.

The space occupied by a virtual object in the virtual environment can be mapped to a corresponding space in the real environment. For the purposes of the present disclosure, this corresponding space in the real environment is labelled a virtual object space.

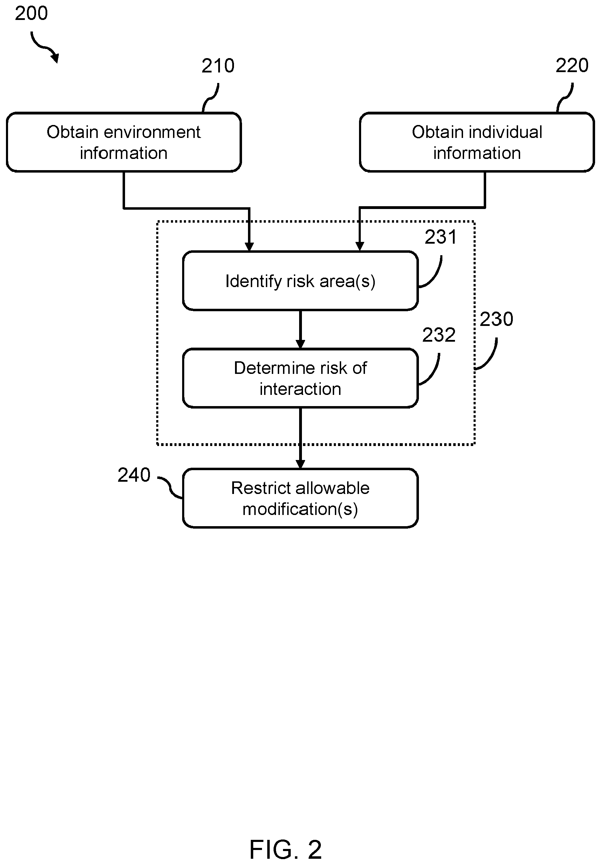

Fig. 2 illustrates a method 200 performed by the modification restriction system 130. Continued reference is made, where relevant, to the system 100 illustrated in Fig. 1.

The method 200 comprises a step 210 of obtaining environment information defining one or more object locations. Each object location represents a location of a real object in the real environment or a location of a virtual object space in the real environment. As previously explained, the virtual object space effectively represents a space of the real environment that would be occupied by a virtual object if that virtual object were actualized or materialized in real life.

The method 200 also comprises a step 220 of obtaining individual information defining at least a location of the individual. The individual information may be generated by a location identification system 140 of the system 100.

The method 200 then comprises a process/step 230 of determining, for each object location, a risk of interaction between the individual and the real object or the virtual object space at the object location by processing the environment information and the individual information.

It is noted that once the skilled person is taught that a risk of interaction between an individual and an object (real or virtual) can be derived from environment information and individual information (containing a location of the individual), then a large number of approaches for carrying out process/step 230 will become apparent. The present disclosure provides a non-exhaustive number of examples for carrying out step/process 230.

Generally, process 230 can be performed by processing the environment information and the individual location(s) to determine the risk of interaction between each object and the individual. This approach may comprise applying one or more rules or rule sets to determine the risk of interaction.

This process 230 can be performed, for instance, responsive to a distance between the individual location and the object location(s). There is an increased risk of interaction as the distance decreases. Further approaches for performing process 230 will be described below.

In some examples, step 230 comprises processing the environment information and the individual information using a machine-learning algorithm. The machine-learning algorithm may, for instance, process (for each object) at least the object location and the individual information to generate or produce a risk of interaction.

The method 200 also comprises a step 240 of restricting the allowable modifications to the virtual environment responsive to every determined risk of interaction. Thus, in step 240, the modification restriction system 130 communicates with the virtual environment generator 110 to control or otherwise define which modifications can be made to the virtual environment by the virtual environment generator 110.

One approach for performing step 230 is to perform all processing in a model space or model domain. A model space/domain defines a virtual co-ordinate system that represents a real space. The virtual environment can be defined within this virtual co-ordinate space.

In this approach, the environment information comprises an environment model, real object information and virtual object information.

The environment model is a computer-storable model of the real environment in the vicinity of the individual. The environment model thereby defines a model space or model domain.

The real object information defines, for each real object in the real environment, a model-space real object location. A model-space real object location is a location of the representation of the real object in the environment model.

The virtual object information defines, for each virtual object space in the real environment, a model-space virtual object location, being a location of the representation of the virtual object space in the environment model. Thus, the virtual object information effectively defines the location of any virtual objects in the environment model.

The individual information comprises a model-space individual location, being a location of the individual defined with respect to the environment model. Approaches for determining and defining such a model-space individual location are well established. For instance, a simultaneous localization and mapping (SLAM) mechanism could be used to establish the position of the individual with respect to the environment model. Another approach maps a tracked location of the individual to a location of the environment model.

Step 230 can make use of this information to determine the risk of interaction between the individual and each object location, i.e., each real object or virtual object space. The determined risk may be an immediate risk (e.g., a risk that the individual will be able to immediately interact with the object) or a future risk (e.g., a risk that the individual is likely to interact with the object in the future).

The determined risk may be defined using binary, categorical and/or numeric data. For instance, a risk may be a binary value indicating a prediction of whether or not the individual is likely to interact with a real object or virtual object at the object location. A categorical risk may indicate a discrete value (e.g., "High", "Medium" or "Low"). A numeric value may provide a numeric value, e.g., on a predetermined scale, indicating a probability or likelihood of interaction. A predetermined scale may range from 0 to 1, 0 to 10, 1 to 10, 0 to 100 or 1 to 100, although other suitable scales will be apparent to the skilled person.

Fig. 2 illustrates one approach for determining the risk of interaction for the individual and each object location, i.e. for performing step 230.

In this approach, step 230 comprises a step 231 of identifying one or more risk areas of the environment model by processing at least the environment model and the model-space individual location. Each risk area is an area of the environment model that represents an area of the real environment that the individual is likely to occupy.

Step 230 also comprises a step 232 of determining, for each model-space (real or virtual) object location, a risk of interaction between the individual and the real object or virtual object space. This is determined responsive to a distance between the model-space (real or virtual) object location and the identified risk area(s).

In particular, the greater the distance between the risk area(s) and the model-space object location, the less the risk of interaction between the individual and the real object or virtual object space.

Step 231 recognizes that an individual will only be able (or likely) to access or occupy certain areas of the environment. Other areas of the environment may be out of reach of the individual or are unlikely to be visited or occupied by the individual. The environment model can be used to define the areas that an individual is likely to approach or reach.

In a simple example, step 231 may simply assume that individuals are likely to physically explore or attempt to interact with all free reachable space within the environment. Thus, step 231 may comprise processing the environment model to identify, as risk areas, and areas sized and/or located such that an individual is able to approach and explore the areas, thereby risking interaction with objects in said areas.

In more advanced embodiments, information about the individual may be used in the identification of the risk area. Thus, the individual information obtained in step 220 may comprise additional information about the individual that is usable for identifying the risk area(s) in step 231.

The following description provides a number of examples of suitable data types and information that can be used to improve the accuracy of identifying the risk area(s) of the environment model.

As an example, information about the dimensions of the individual may be used to assess the areas of the environment that are accessible by the individual (e.g., taller individuals such as adults will be able to access taller locations than smaller individuals such as children). As another example, a reach distance of the individual may be used to help define areas that can be reached by the individual.

In some examples, a posture of the individual is used to identify potential risk areas. Changes in the posture of an individual indicate changes in the likelihood that an individual will approach or interact with an accessible area. For instance, a standing individual is more likely to investigate an accessible area than a seated individual. Thus, information indicative of a posture of the individual(s) is usable to identify risk areas with greater accuracy.

In some examples, an eye gaze of the individual is used in the identification of any risk area(s). A user is more likely to attempt approaching an area if they are looking or gazing at said area. Thus, information on an eye gaze of the individual improves an accuracy of identifying any risk areas.

Approaches for tracking an eye gaze of an individual are well established in the art, and could be employed in embodiments of the invention. Approaches for mapping an eye gaze of an individual to a model-space are also well established, and could be used in the identification of the risk area(s).

In some examples, a role or function of the individual is used in the identification of the risk area(s). It is appreciated that, for a particular environment, different types of individual will perform different actions, thereby defining the likely risk area(s) for that individual. By way of example, a cleaner is likely to access all accessible areas of the environment, meaning that any accessible area is a risk area. By contrast, a clinician in a clinical environment is likely to access only certain areas (e.g., an area around a patient or near a patient monitoring device). Thus, an accuracy of identifying the risk areas can be improved by making use of the type or role of the individual.

In some examples, a distance between the model-space individual location and each potential risk location is used to identify the risk locations. For instance, risk areas may be identified as being areas of the environment model that are within a predetermined distance of the model-space individual location. This approach recognizes that an individual is more likely to engage with an area the closer they are to the area.

In some examples, one or more user-indicated locations are used in the determination of the risk area(s). For instance, a user may be able to indicate (e.g., using their voice) an intended target area that they are headed towards. This information can be used to identify the corresponding area of the environment model (that represents the indicated area) as a risk area. The user indication may be provided in the form of a speech or gesture. Speech or gesture(s) can be processed using appropriate recognition approaches to identify an indicated area to which the user is headed.

In some examples, the past or historic actions of the individual in the same or similar environment can be used in the identification of the risk area(s). In particular, if an individual has previously visited the same environment, then the risk area(s) may represent the area(s) previously visited by the individual.

Any of the above-identified types of information about the individual may be contained in the individual information obtained in step 220.

As previously explained, step 232 determines, for each real object or virtual object space, a risk of interaction between the individual and the real object or virtual object space. This is performed based on a distance between the object location and the risk areas.

For instance, a binary risk indicator may simply identify whether or not the object location is within the risk area. A numeric risk indicator may identify a (e.g., normalized) distance between the object location and the risk area.

In some examples, the type of the real object or virtual object (of the virtual object space) is used in the determination of the risk of interaction between the individual and the real object or virtual object space. By way of example only, an individual is more likely to attempt to interact with a chair compared to a plant. This clearly demonstrates how the type of the object can influence the risk that an individual will interact with the object.

In some examples, one or more activities associated or associable with the real or virtual objects may be usable in the determination of the risk of interaction. For example, people may attempt sitting down on a chair, stool, or couch, attempt putting objects on a table, attempt lying down on a bed, or attempt to cuddle a (virtual) pet. This can assist in assessing the risk of interaction.

The previously described embodiment provides a risk area based approach for identifying or assessing the risk(s) of interaction between an individual and an object, i.e., performing process 230.

However, other approaches for performing step 230 are envisaged. For instance, step 230 can be performed based solely upon a distance between each model-space object location and the model-space individual location. The greater a distance between the individual location and the object location, the lower the risk of interaction.

Thus, a distance between an object location and the individual location may effectively represent a risk of interaction between the individual and the real object or virtual object space associated with the object location.

In some examples, a distance (between the individual and the real object or virtual object space) and individual information can be used to determine a risk of interaction between the individual and the real object or virtual object space.

The individual information may, for instance, contain information on a reach distance or height of the individual. The greater the reach distance, the greater the risk that the individual will interact with an object at a further location from the individual location.

As an example, the individual information may comprise activity and/or posture information. An individual may be more likely to interact with an object when performing certain activities or in certain postures than others.

Another approach can be to predict a future location of the individual based on at least the individual information. The individual information may, for instance, contain historic or previous locations of the individual.

Step 230 could be performed by using historic or previous locations to predict a movement or path of the individual, e.g., to predict a direction in which the individual will move in the future. The predicted movement or path can be used to identify one or more predicted future location(s) of the individual.

The predicted future location(s) can be used to determine a risk of interaction between the individual and each real object or virtual object space. For instance, a distance between the future location(s) and an object location may indicate or represent a risk of interaction between the individual and the real object or virtual object space at the object location.

Step 240 comprises restricting the allowable modifications to the virtual environment responsive to every or each determined risk of interaction. Thus, in step 240, the modification restriction system 130 communicates with the virtual environment generator 110 to control or otherwise define which modifications can be made to the virtual environment by the virtual environment generator 110.

Various approaches to restricting the modifications that can be made to the virtual environment are envisaged. The precise restrictions will, of course, depend upon the available potential modifications to the virtual environment that could be performed by the virtual environment generator. A non-exhaustive number of examples are hereafter provided.

In one example, if a risk indicator for a real object represented by the virtual environment exceeds a first risk threshold then step 240 may restrict the modifications such that there is a minimum allowable opacity for the virtual representation of said real object. The minimum allowable capacity is non-zero, e.g., 50%, 75% and so on. Effectively, this can restrict or prevent the removal of the representation of certain real objects in the virtual environment. This would significantly reduce a likelihood that an individual will interact with the real object without being aware of its existence (e.g., trip over the object or bump into the object).

In one example, if a risk indicator for a real object represented by the virtual environment exceeds a second risk threshold then step 240 may restrict the modifications to restrict the available shapes, colors and/or textures usable for modifying the shape, color or texture of the virtual representation of the real object. For example, it may restrict the height of a virtual table, bed, chair, stool or couch in relation to the real table etc. that is replaced with the virtual content. This to avoid that some tries to place an object or himself on the table etc., and then accidentally hurting himself.

This approach may, for instance, prevent the possibility of virtually replacing a texture of a real object with a clashing texture, e.g., a texture that would provide substantially different tactile properties or appearance for an individual. For instance, if the real object is a screen, the restrictions may allow the screen to be virtually replaced with a glass window but not with a brick wall. As another example, if the real object is a plastic chair, the restrictions may allow the texture of the plastic chair to be virtually replaced with a metal material but not a padded velvet texture.

Decisions and/or restrictions on modifications may be informed by texture haptics/acoustics/smell knowledge, e.g., defined by a set of rules.

As an example, if a risk indicator for a real object represented by the virtual environment exceeds a third risk threshold then step 240 may restrict the modifications to restrict the available shapes or replacement virtual object for the virtual representation of the real object. For instance, if the real object is a stool on which the individual, the restrictions may prevent the stool from being replaced with a chair (e.g., to reduce a change of an individual attempting to lean on a non-existent back for the chair).

As an example, if a risk indicator for a virtual object space representing a virtual object in the virtual environment exceeds a fourth risk threshold, then step 240 may restrict the modifications to restrict the maximum available opacity and/or color for the virtual object in the virtual environment. For instance, if the virtual object is a wall, a maximum opacity for the wall may be set, e.g., to 50% or 25% to reduce a likelihood that an individual will believe the virtual wall to be a real wall.

Some embodiments make use of a machine-learning algorithm to produce the risk(s) of interaction.

A machine-learning algorithm is any self-training algorithm that processes input data in order to produce or predict output data. Here, the input data comprises environment information and individual information and the output data comprises one or more risk(s) of interaction between the individual and the real/virtual object(s).

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian model are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

The skilled person would be readily capable of developing a processing system for carrying out any herein described method. Thus, each step of the flow chart may represent a different action performed by a processing system, and may be performed by a respective module of the processing system.

The modification restriction system is one example of a processing system.

The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Ordinal numbers (e.g. "first", "second" and so on) have been used purely to distinguish different elements from one another for the sake of clarity, and reference to a non-"first" (e.g. "second" or "third") element does not necessitate that a "first" element be present. The skilled person would be capable of relabeling any such elements as appropriate (e.g. relabeling a "second" element as a "first" element if only the second element is present).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method (200) of controlling allowable modifications to a virtual environment, being a modifiable virtual representation of a real environment, provided to an individual by a display provided at a user interface, the computer-implemented method comprising:
obtaining (210) environment information defining one or more object locations, each object location representing a location of a real object in the real environment or a location of a virtual object space in the real environment, being a space in the real environment that is represented by a space occupied by a virtual object in the virtual environment;
obtaining (220) individual information defining at least a location of the individual;
determining (230), for each object location, a risk of interaction between the individual and the real object or the virtual object space at the object location by processing the environment information and the individual information; and
restricting (240) the allowable modifications to the virtual environment responsive to every determined risk of interaction.

2. The computer-implemented method of claim 1, wherein:
the environment information comprises:
an environment model, being a computer-storable model of the real environment in the vicinity of an individual;
real object information defining, for each real object in the real environment, a model-space real object location, being a location of the representation of the real object in the environment model; and
virtual object information, defining, for each virtual object space in the real environment, a model-space virtual object location, being a location of the representation of the virtual object space in the environment model; and
the individual information comprises a model-space individual location, being a location of the individual defined with respect to the environment model.

3. The computer-implemented method of claim 2, wherein the step of determining, for each object location, a risk of interaction comprises:
identifying one or more risk areas of the environment model by processing at least the environment model and the model-space individual location, each risk area being an area of the environment model that represents an area of the real environment that the individual is likely to occupy;
determining, for each model-space real object location, the risk of interaction between the individual and the real object associated with the model-space real object location, the determining being responsive to a distance between the model-space real object location and the one or more risk areas of the environment model; and
determining, for each model-space virtual object location, the risk of interaction between the individual and the virtual object space associated with the model-space virtual object location, the determining being responsive to a distance between the model-space virtual object location and the one or more risk areas of the environment model.

4. The computer-implemented method of claim 3, wherein:
the individual information further comprises size information defining the dimensions of the individual; and
the step of identifying one or more risk areas comprises processing at least the environment model, the model-space individual location and the size information to identify the one or more risk areas.

5. The computer-implemented method of claim 3 or 4, wherein:
the individual information further comprises posture and/or activity information defining the posture and/or activity of the individual; and
the step of identifying one or more risk areas comprises processing at least the environment model, the model-space location and the posture and/or activity information to identify the one or more risk areas.

6. The computer-implemented method of any of claims 1 to 5, wherein the environment information further defines a type of each real object in the real environment.

7. The computer-implemented method of any of claims 1 to 6, wherein the individual information comprises historic interaction information, being information on historic interactions of the individual with the real environment.

8. The computer-implemented method of any of claims 1 to 7, wherein the step of determining, for each object location, a risk of interaction comprises:
processing at least the individual information to predict a future location of the individual; and
processing at least the predicted future location of the individual and the environment information to determine, for each object location, a risk of interaction between the individual and the real object or virtual object space at the object location.

9. The computer-implemented method of claim 8, wherein the individual information further comprises one or more historic or previous locations of the individual.

10. The computer-implemented method of any of claims 1 to 9, wherein restricting the allowable modifications to the virtual environment comprises, responsive to a determined risk of interaction between the individual and a first real object exceeding a first predetermined risk threshold, restricting the minimum allowable opacity of the virtual representation of the first real object by the display provided at the user interface.

11. The computer-implemented method of any of claims 1 to 10, wherein restricting the allowable modifications to the virtual environment comprises, responsive to a determined risk of interaction between the individual and a second real object exceeding a second predetermined risk threshold, restricting the available shapes, colors and/or textures usable for modifying the shape, color or texture of the virtual representation of the second real object by the display provided at the user interface.

12. The computer-implemented method of any of claims 1 to 11, wherein restricting the allowable modifications to the virtual environment comprises, responsive to a determined risk of interaction between the individual and a first virtual object space exceeding a third predetermined risk threshold, restricting a maximum opacity of the virtual object that occupies the space of the virtual environment representing the first virtual object space.

13. A computer program product comprising computer program code means which, when executed on a computing device having a processing system, cause the processing system to perform all of the steps of the method according to any of claims 1 to 12.

14. A modification restriction system for controlling allowable modifications to a virtual environment, being a modifiable virtual representation of a real environment, provided to an individual by a display provided at a user interface, the modification restriction system being configured to:
obtain environment information defining one or more object locations, each object location representing a location of a real object in the real environment or a location of a virtual object space in the real environment, being a space in the real environment that is represented by a space occupied by a virtual object in the virtual environment;
obtain individual information defining at least a location of the individual;
determine, for each object location, a risk of interaction between the individual and the real object or the virtual object space at the object location by processing the environment information and the individual information; and
restrict the allowable modifications to the virtual environment responsive to every determined risk of interaction.

15. A user interface system comprising:
the modification restriction system of claim 14; and
the user interface comprising a display for providing the virtual environment to the subject.
